# EUROPEAN PATENT APPLICATION

(11) **EP 0 827 316 A2**
(43) Date of publication of application: **04.03.1998**
(21) Application number: 97305417.4
(22) Date of filing: 18.07.1997
(51) Int. Cl.: H04M 1/74

(54) **A device for protecting a telecommunications apparatus**

(30) Priority: 18.07.1996 GB 9615082
(71) Applicant: BOWTHORPE INDUSTRIES LIMITED, Crawley West Sussex RH10 2RZ (GB)
(72) Inventor: Millis, John Edward, Haywards Heath, West Sussex RH17 5ED (GB)
(74) Representative: Milhench, Howard Leslie

(57) **Abstract**

A device (1) for protecting a telecommunications apparatus against an abnormal transient voltage signal received via a telecommunications line (2, 3) comprises means (16, 18, 20, 22, 26) for selectively suppressing the transient voltage signal from other normal communications signals. The suppression means (16, 18, 20, 22, 26) are responsive to the frequency of the transient voltage signal rather than its voltage. Overvoltage protection means (12, 14) may also be provided for suppressing transient and continuous overvoltage signals present on the telecommunications line (2, 3).

## Description

The present invention relates to a device for protecting a telecommunications apparatus against a transient voltage signal received via a telecommunications line. More particularly, though not exclusively, the present invention relates to a telecommunications line protector apparatus for suppressing both overvoltage signals and abnormal transient voltage signals present on telecommunication lines such as Public Switched Telephone Network (PSTN) lines, or received by telecommunications equipment such as Private Automatic Branch Exchanges (PABX).

Conventional protection devices are used to protect telephone equipment and telecommunication lines from abnormally high-voltage signals as may be generated by lightning or by induction from a high-voltage power transmission line. Such known protection devices comprise an overvoltage suppressor which is activated to absorb the overvoltage when a DC voltage signal on the telecommunications line reaches a predetermined DC limiting maximum voltage; typically between 200 and 600 volts. The overvoltage suppressor is arranged to suppress both transient voltage signals as well as continuous overvoltage signals. Normal line signals including communication, voice and ringing waveforms pass through the protection device unaffected because they are far lower in magnitude than the DC limiting maximum voltage.

As telecommunications equipment has become reliant on semiconductor technology, there has been a realisation that low-voltage transient signals are often present on telecommunication lines which can cause damage to semiconductor circuits in telecommunication equipment. Conventional overvoltage suppressors do not provide adequate protection because the voltage of these transient signals is below the DC limiting maximum voltage and the overvoltage suppressors are therefore not activated. Reducing the DC limiting maximum voltage to a low enough level to suppress these low-voltage transient signals is not viable because the normal communications signals would also be suppressed.

Accordingly, it is desired to provide protection for telecommunications equipment against low-voltage transient signals without affecting the normal communications signals. In devices incorporating overvoltage protection it is desired to provide protection against transient signals having a lower voltage than that of the DC limiting maximum voltage.

The present invention resides in the appreciation that the low-voltage transient signals have a relatively high frequency as compared to the normal communications signals and in that, accordingly, the low-voltage transient signals can be selectively suppressed by appropriate frequency filtering.

According to one aspect of the present invention, there is provided a device for protecting a telecommunications apparatus against a transient voltage signal received via a telecommunications line, said apparatus comprising means for selectively suppressing the transient voltage signal from other communications signals, said means being responsive to the frequency of the transient voltage signal for suppressing the same.

According to a more particular aspect of the present invention, there is provided a device for protecting a telecommunications apparatus against an abnormal transient voltage signal received via a telecommunications line, said apparatus comprising: a low-pass filtering stage for filtering out said transient voltage signal, said filtering stage normally being disabled thereby allowing the passage of normal telecommunications signals therethrough; and an activation stage which is triggered if the frequency of the transient voltage signal exceeds a predetermined value and which, when triggered, enables the low-pass filtering stage, thereby to suppress said abnormal transient voltage signal.

The provision of an activation stage advantageously provides "intelligence" to the low-pass filtering stage in that the filtering stage is only selectively enabled by the appropriate frequency transient signal.

Preferably, the device is arranged to operate with a telecommunications line having ring and tip conductors, and to suppress transient voltage signals received on either or both of the ring and tip conductors. In this way, the device can be used to protect telecommunications apparatus using a conventional telecommunications lines. In addition, the device can also be placed in selected positions in a telecommunications network to provide protection for conventional telecommunication lines.

The low-pass filtering and activation stages are preferably kept simple with minimal numbers of components to advantageously minimise manufacturing costs. For example, the low-pass filtering stage may simply comprise one or more series resistors and a parallel capacitor and the activation stage may comprise a triac and a trigger capacitor connected to a gate thereof.

The present invention extends to a protection apparatus which protects telecommunications devices against low-voltage transient signals and transient overvoltage or continuous overvoltage signals.

According to another aspect of the present invention, there is provided a telecommunications line protector apparatus for protecting a telecommunications apparatus against overvoltage signals and transient voltage signals received via a telecommunications line, said apparatus comprising: a DC suppression stage for suppressing an overvoltage signal present on the telecommunications line; and a transient suppression stage for suppressing a relatively low-voltage high-speed transient signal present on the telecommunications line, said transient suppression stage being responsive to the frequency of the transient signal for suppressing the same.

Preferably, the DC suppression stage is arranged to permit wire-to-wire voltage suppression and wire-to-ground voltage suppression. By incorporating both of these types of voltage suppression, overvoltages present on both or either one of a conventional tip and ring pair can be suppressed. The DC suppression stage may also be arranged to have a relatively low on-state resistance. This advantageously results in a very low output voltage of the apparatus that would not damage a telecommunications device connected thereto.

A plurality of telecommunications line protector apparatus of the present invention may be used as part of a device for protecting a multi-line telecommunications apparatus against abnormal transient signals or overvoltage signals where each line protector apparatus is arranged to protect a corresponding telecommunications line. Such a device would provide a compact and simple solution to protection required for PABXs or PSTNs for example.

According to another aspect of the present invention there is provided a method of protecting a telecommunications apparatus against a transient voltage signal received via a telecommunications line, said method comprising selectively filtering out the transient voltage signal from other communications signals in response to the transient voltage signal being at least a predetermined frequency.

The above and further features of the present invention are set forth with particularity in the appended claims and together with the advantages thereof will become apparent by consideration of the following detailed description of an exemplary embodiment of the invention given with reference to the accompanying drawings. In the drawings:
Figure 1 is a schematic block diagram showing a telecommunications line protector device embodying the present invention; and
Figure 2 is a circuit diagram of the telecommunications line protector device of Figure 1.

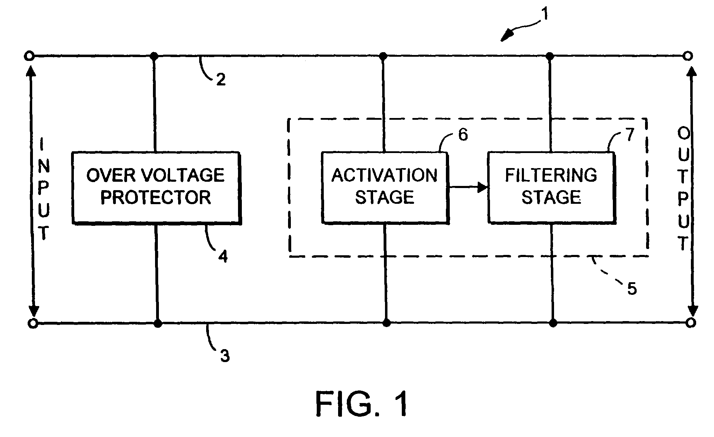

Referring now to Figure 1 there is shown a telecommunications line protector device 1 which is used to protect telecommunications equipment from damage due to abnormal overvoltage signals and low-voltage transient signals. The device 1 is shown connected to a conventional telecommunications line comprising a ring conductor 2 and a tip conductor 3. The device 1 comprises two stages, a primary stage 4 and a secondary stage 5, which act to suppress different types of abnormal signals.

The primary stage 4 provides overvoltage suppression against relatively long transient signals, for example 10 to 700µS at 100 Amps peak current, and continuous overvoltages limited to 1 Amp current. The primary stage 4 only suppresses signals having a voltage that has reached a DC limiting maximum voltage; in this case this is set to be between 420 volts and 600 volts. Normal telecommunications signals including digital, voice and ringing waveforms, have a much lower voltage than the DC limiting maximum voltage and, accordingly, pass through the primary stage 4 unaffected.

The secondary stage 5 provides protection against relatively short-duration transient voltage signals which are below the DC limiting maximum voltage of the primary stage 4. The secondary stage 5 of this embodiment is designed for optimum performance on transient signals of 200 volts and 1µS duration. This type of waveform is typically produced by a gas discharge tube protection device (not shown) which may be connected to the conventional telecommunications line 2, 3 upstream of the device 1. However, the secondary stage 5 is also effective at suppressing faster (higher-frequency) transient signals and even signals as small as 40 volts in magnitude. The operation of the secondary stage 5 depends on the frequency of the transient voltage signal and not its voltage. Accordingly, the secondary stage 5 filters out relatively small high-speed transient signals without affecting the normal telecommunications signals.

The secondary stage 5 comprises an activation stage 6 and a filtering stage 7. The filtering stage 7 essentially comprises a low-pass filter which absorbs high-frequency transient voltage signals. The filtering stage 7 is normally disconnected from the ring and tip conductors 2, 3 by the activation stage 6. However, the activation stage 6 is responsive to high-frequency transients and when such a high-frequency transient is detected, the activation stage 6 enables the filtering stage 7 by connecting it into circuit with the ring and tip conductors 2, 3.

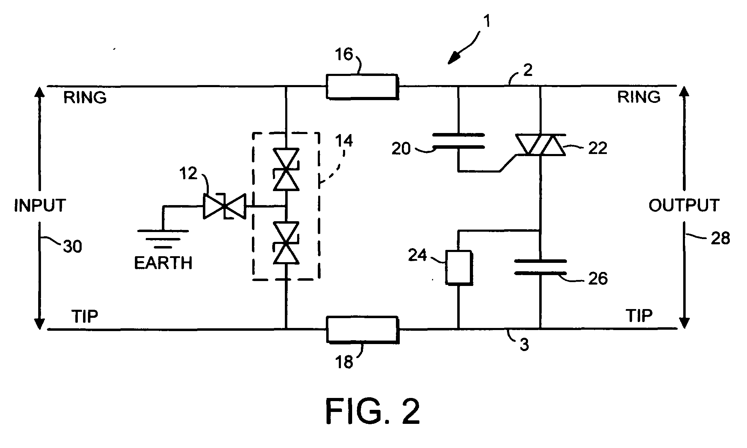

Referring now to the circuit diagram of the telecommunications line protector device 1 of Figure 2, the individual components which make up the primary and secondary stages 4, 5 are shown. As can be seen, only 8 discrete electronic components are required for the device 1.

The primary stage 4 comprises two transient and overvoltage suppressors 12, 14 which are manufactured by Teccor Incorporated under the trademark SIDACtor™. The first suppressor 12 is a type P2600BA70 and the second suppressor 14 is a type P4802AB. The second suppressor 14 is connected between the ring and tip conductors 2, 3 and the first suppressor 12 is connected between a midpoint of the second suppressor 14 and earth.

This configuration of the first and second suppressors 12, 14 provides normal and common mode surge suppression and DC overvoltage suppression with a wire-to-wire and wire-to-ground breakdown voltage of between 420 Volts and 600 Volts. A useful characteristic of the first and second semiconductor suppressors 12, 14 is their low on-state resistance which results in a very low output voltage when in a clamping condition, i.e. when an overvoltage is being absorbed.

The secondary stage 5 comprises two series resistors 16, 18, a trigger capacitor 20, a triac 22, a discharge capacitor 24 and a filter capacitor 26. The two series resistors 16, 18 are connected in line with the ring and tip conductors 2, 3 respectively. The series resistors 16, 18 limit the current flow to the rest of the secondary stage 5 and thereby reduce the output ring-tip voltage 28 to below the input ring-tip voltage 30 across the primary stage 4.

The filtering stage 7 is essentially the filtering capacitor 26 and the series resistors 16, 18 which together form an RC network low-pass filter. The filtering capacitor 26 has a value of 330nF and the series resistors are each valued at 22Ω so that the time constant of the filter is tuned to filter out 1µS transient voltage signals. The filtering stage 7 also includes the discharge resistor 24, valued at 100kΩ, connected in parallel with the filtering capacitor 26 to provide a path through which the filtering capacitor 26 can discharge in preparation for the next abnormal transient voltage signal.

The RC network is gated into circuit by the triac 22 and the trigger capacitor 20. The triac 22 can connect one side of the filter capacitor 26 to the ring conductor 2 in the presence of a transient voltage signal. The triac 22 is enabled by the transient voltage signal which is fed to the gate of the triac 22 via the trigger capacitor 20. The triac is in this embodiment a type Z0109MA but other equivalent types of triac could also be used. The trigger capacitor 20 is valued at 100pF and therefore is responsive only to high-frequency signals.

Under normal conditions, the triac 22 is open circuit and effectively disconnects the filtering capacitor 26 from the circuit. The triac 22 is capable of withstanding 600 Volts when open circuit and, therefore, allows for the DC limiting voltage range of the primary stage 4. When a high-frequency transient voltage signal passes along the tip conductor 3, the ring conductor 2 or both conductors, from the primary stage 4 to the secondary stage 5, a part of the signal is conducted through the trigger capacitor 20 to the gate of the triac 22. This causes the triac 22 to respond and go short circuit thereby connecting the filtering stage 7 into circuit and suppressing the transient voltage signal.

In the above described embodiment, the telecommunications line protector device 1 has a primary stage 4 for suppressing both transient and continuous overvoltage signals. However, the present invention is not restricted to devices incorporating overvoltage protection and it would be possible for an embodiment of the invention only to provide protection against low-voltage high-frequency transient signals. Such an embodiment could then, if required, be used with conventional surge protection technology to provide maximum protection for a telecommunications device or telecommunications line.

The embodiment described above is directed to a device for use with a single telecommunications line. However, a plurality of such devices can readily be formed in an integrated module for protecting a plurality of telecommunications lines. Such a multi-line suppressor could advantageously be used in a PABX to reduce the overall costs and simplify the design of the PABX

Having thus described the invention by reference to a particular embodiment, it is to be appreciated that the described embodiment is exemplary only and is susceptible to modification and variation without departure from the spirit and scope of the invention as set forth in the appended claims. For example, the simple RC low-pass filter could be replaced with higher-order RC filters or even with active filters to provide an improved filter response. In addition, the triac could be replaced by a combination of thyristors and diodes. However, replacement of these parts would probably increase the component count and any improved performance of the circuit would have to be considered against increased costs.

## Claims

1. A device for protecting a telecommunications apparatus against a transient voltage signal received via a telecommunications line, said apparatus comprising means for selectively suppressing the transient voltage signal from other communications signals, said means being responsive to the frequency of the transient voltage signal for suppressing the same.

2. A device for protecting a telecommunications apparatus against an abnormal transient voltage signal received via a telecommunications line, said apparatus comprising:
a low-pass filtering stage for filtering out said transient voltage signal, said filtering stage normally being disabled thereby allowing the passage of normal telecommunications signals therethrough; and
an activation stage which is triggered if the frequency of the transient voltage signal exceeds a predetermined value and which, when triggered, enables the low-pass filtering stage, thereby to suppress said abnormal transient voltage signal.

3. A device according to claim 2, wherein said device is arranged to operate with a telecommunications line having a ring conductor and a tip conductor and to suppress transient voltage signals received on either or both of the ring or tip conductors.

4. A device according to claim 2 or 3, wherein the low-pass filtering stage comprises one or more series resistors and a parallel capacitor.

5. A device according to claim 4, wherein said low-pass filtering stage further comprises a discharge resistor connected in parallel with said parallel capacitor.

6. A device according to any of claims 2 to 5, wherein the activation stage comprises a triac and a trigger capacitor, said trigger capacitor being provided in parallel with said triac and being connected to a gate thereof.

7. A device according to claim 6, wherein the triac has a breakdown voltage in excess of 600 volts.

8. A telecommunications line protector apparatus for protecting a telecommunications apparatus against overvoltage signals and transient voltage signals received via a telecommunications line, said apparatus comprising:
a DC suppression stage for suppressing an overvoltage signal present on the telecommunications line; and
a transient suppression stage for suppressing a relatively low-voltage high-speed transient signal present on the telecommunications line, said transient suppression stage being responsive to the frequency of the transient signal for suppressing the same.

9. An apparatus according to claim 8, wherein said DC suppression stage is arranged to permit wire-to-wire voltage suppression and wire-to-ground voltage suppression.

10. An apparatus according to claim 8 or 9, wherein said DC suppression stage has a relatively low on-state resistance.

11. An apparatus according to any of claims 8 to 10, wherein said transient suppression stage comprises a device according to any of claims 2 to 7.

12. An apparatus according to any of claims 8 to 11, wherein part of said transient suppression stage is arranged to reduce the voltage of all signals received via the telecommunications line.

13. A device for protecting a multi-line telecommunications apparatus against abnormal transient voltage signals and overvoltage signals received via any of a plurality of telecommunication lines connected thereto in use; said device comprising a plurality of telecommunications line protector apparatus according to any of claims 8 to 12, each apparatus being arranged to protect a corresponding telecommunications line.

14. A Public Switched Telephone Network or a Private Automatic Branch Exchange comprising a device or apparatus according to any preceding claim.

15. A method of protecting a telecommunications apparatus against a transient voltage signal received via a telecommunications line, said method comprising selectively filtering out the transient voltage signal from other communications signals in response to the transient voltage signal being at least a predetermined frequency.

16. A device, apparatus or method substantially as herein described with reference to the accompanying drawings.
